(19) Europäisches Patentamt
European Patent Office
Office européen des brevets

(11) Veröffentlichungsnummer: **0 099 990**
**B1**

(12) # EUROPÄISCHE PATENTSCHRIFT

(45) Veröffentlichungstag der Patentschrift: **15.01.86**

(51) Int. Cl.⁴: **C 08 G 63/68 //**
G11B3/70

(21) Anmeldenummer: **83106260.9**

(22) Anmeldetag: **28.06.83**

(54) **Verfahren zur Herstellung von Polycarbonaten mit N-Alkyl-perfluoralkylsulfonamid-Endgruppen.**

(30) Priorität: **10.07.82 DE 3225884**

(43) Veröffentlichungstag der Anmeldung:
**08.02.84 Patentblatt 84/6**

(45) Bekanntmachung des Hinweises auf die Patenterteilung:
**15.01.86 Patentblatt 86/3**

(84) Benannte Vertragsstaaten:
**DE FR GB IT**

(56) Entgegenhaltungen:
**EP-A-0 000 396**
**DE-A-1 264 778**
**DE-A-1 930 257**
**US-A-4 007 150**
**US-A-4 041 003**

(73) Patentinhaber: **BAYER AG, Konzernverwaltung RP Patentabteilung, D-5090 Leverkusen 1 Bayerwerk (DE)**

(72) Erfinder: **Krishnan, Sivaram, Dr., 159 Fairview Drive, New Martinsville West Virginia 26 155 (US)**
Erfinder: **Neuray, Dieter, Dr., 140 Fairview Drive, New Martinsville West Virginia 26 155 (US)**
Erfinder: **Cohnen, Wolfgang, Dr., Heymannstrasse 36, D-5090 Leverkusen (DE)**
Erfinder: **Geisler, Klaus, Dr., Limpericher Strasse 77, D-5300 Bonn 3 (DE)**

**EP 0 099 990 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Gegenstand der vorliegenden Erfindung ist die Herstellung von linearen aromatischen Polycarbonaten mit Gewichtsmittelmolekulargewichten ($\bar{M}_w$) zwischen 10 000 und 100 000 nach den bekannten Zweiphasen-Grenzflächenverfahren, aus Diphenolen, Kettenabbrechern und Phosgen unter Anwendung bekannter Katalysatoren, Lösungsmittel, Alkalikonzentrationen und Reaktionstemperaturen, gekennzeichnet durch den Einsatz von N-Alkyl-perfluoralkyl-sulfonamiden und/oder N-Cycloalkyl-perfluoralkylsulfonamiden als Kettenabbrecher in Mengen von 1 Mol-% bis 10 Mol-%, vorzugsweise 2 Mol-% bis 5 Mol-% bezogen auf die Mole an jeweils eingesetzten Diphenolen.

Die vorliegende Anmeldung bezieht sich außerdem auf lineare aromatische Polycarbonate, die nach dem erfindungsgemäßen Verfahren erhältlich sind.

Die vorliegende Erfindung bezieht sich außerdem auf Polycarbonate der allgemeinen Formel (III)

$$E-(O-Z-O-\underset{\underset{O}{\|}}{C})_n-O-Z-O-E' \qquad (III),$$

worin

E und E' die gleichen oder verschiedenen Reste der Formel (IV) sind,

$$R_f'-SO_2-\overset{|}{N}-R$$

in der

$R_f'$ ein lineares oder verzweigtes perfluoriertes Alkyl, R ein lineares oder verzweigtes, gesättigtes oder ungesättigtes Alkyl oder Cycloalkyl, Z ein zweiwertiger aromatischer Rest und "n" der Polymerisationsgrad ist, der einem Gewichtsmittelmolekulargewicht $\bar{M}_w$ des aromatischen Polycarbonats von etwa 10 000 bis etwa 100 000 entspricht.

Die Produkte der vorliegenden Erfindung zeigen eine geringere Schmelzviskosität im Vergleich zu Polycarbonaten desselben Molekulargewichts und von ähnlicher Uneinheitlichkeit, die mit Monophenolen abgebrochen sind.

In der DAS 1 264 778 wird der Gebrauch fluorierter aliphatischer Alkohole (I) als Kettenabbrecher für Polycarbonate erwähnt.

$$H-(CF_2-CF_2)_n-CH_2OH$$

In den US-Patenten 4 007 150 und 4 041 003 wird die Verwendung von Perfluoralkylsulfonamiden im Bereich von 0,001 bis 1 Gew.-% als Additiv zur Verbesserung des Entformungsverhaltens von Polycarbonat beschrieben, eine Verringerung der Schmelzviskosität von derartigen Polycarbonat-Formmassen wird jedoch nicht erwähnt.

Im US-Pat. 3 775 367 wird die verwendung von Perfluoralkansulfonsäuresalzen als Additiv zur Verbesserung der flammhemmenden Eigenschaften von Polycarbonaten, nicht jedoch die Verringerung von deren Schmelzviskosität beschrieben.

Der überraschende Effekt der vorliegenden Erfindung liegt in der reduzierten Schmelzviskosität von linearen Polycarbonaten auf Basis von Diphenolen im Gewichtsmittelmolekulargewichtsbereich ($\bar{M}_w$) von 10 000 bis 100 000, die mit N-Alkyl-perfluoralkylsulfonsäureamiden der allgemeinen Formel (II) abgebrochen sind, verglichen mit handelsüblichen linearen Polycarbonaten desselben Molekulargewichts, die mit Monophenolen als Kettenabbrecher abgebrochen sind. Darüber hinaus werden die charakteristischen Eigenschaften handelsüblicher linearer Polycarbonate beibehalten, wenn als Kettenabbrecher die N-Alkyl-perfluoralkylsulfonamide verwendet werden.

$$R_f'-SO_2-NH-R \qquad (II)$$

Im Prinzip ist es möglich, jedes N-Alkyl-perfluoralkylsulfonamid (II) zu verwenden, worin $R_f'$ ein lineares oder verzweigtes perfluoriertes Alkyl mit vorzugsweise 1 bis 20 Kohlenstoffatomen und R ein lineares oder verzweigtes, gesättigtes oder ungesättigtas Alkyl mit vorzugsweise 1 bis 20 Kohlenstoffatomen oder ein Cycloalkyl mit vorzugsweise 5 bis 6 Kohlenstoffatomen bedeuten.

Die bevorzugten N-Alkyl-perfluoralkylsulfonamide sind N-Methyl-perfluorbutylsulfonamid, N-Methyl-perfluoroctylsulfonamid, N-Stearyl-perfluorbutylsulfonamid, N-Stearyl-perfluoroctylsulfonamid, N-Decylperfluorbutylsulfonamid und N-Oleyl-perfluoroctylsulfonamid.

Die besonders geeigneten aromatischen Polycarbonate der vorliegenden Erfindung können durch die allgemeine Formel (III) charakterisiert werden,

$$E-(O-Z-O-\underset{\overset{\|}{O}}{C})_n-O-Z-O-E' \qquad (III)$$

worin

E und E' die gleichen oder verschiedenen Reste der Formel (IV) sind,

$$R_f'-SO_2-\overset{|}{N}-R \qquad (IV)$$

in der

$R_f'$ lineares oder verzweigtes perfluoriertes $C_1$-$C_{20}$-Alkyl und R lineares oder verzweigtes gesättigtes oder ungesättigtes $C_1$-$C_{20}$-Alkyl oder $C_5$-$C_6$-Cycloalkyl bedeuten.

In (III) stellt Z einen zweiwertigen aromatischen Rest dar mit vorzugsweise 6 bis 30 Kohlenstoffatomen, der sich von einem Diphenol der Formel (V) herleitet,

$$HO-Z-OH \qquad (V)$$

und n ist der Polymerisationsgrad, der einem Gewichtsmittel-Molekulargewicht $\bar{M}_w$ des linearen aromatischen Polycarbonats zwischen 10 000 und 100 000 entspricht.

Die Herstellung der erfindungsgemäßen Polycarbonate mit Hilfe des Zweiphasengrenzflächenverfahrens ist bekannt. Die Polycarbonate werden durch Reaktion von Diphenolen, insbesondere Dihydroxydiarylalkanen oder -cycloalkanen mit Phosgen erhalten; Dihydroxydiarylalkane und -cycloalkane, in welchen die Arylkerne in ortho-Stellung zu den phenolischen Hydroxylgruppen substituiert sind, sind ebenfalls geeignet zusätzlich zu den unsubstituierten Dihydroxydiarylalkanen und -cycloalkanen.

Die bekannten Katalysatoren wie Triethylamin und die üblichen Lösungsmittel, Reaktionstemperaturen und Mengen Alkali für das Zweiphasen-Grenzflächenverfahren sind gleichfalls bekannt und beispielsweise in Hermann Schnell, "Chemistry and Physics of Polycarbonates" Interscience Publishers, New York, 1964, beschrieben.

Die erfindungsgemäßen Polycarbonate haben Gewichtsmittel-Molekulargewichte ($\bar{M}_w$) zwischen 10 000 und 100 000, vorzugsweise zwischen 20 000 und 80 000, die durch die relative Lösungsviskosität der Polycarbonate bestimmt werden können (gemessen in Dichlormethan bei 25°C und einer Konzentration von 0,5 g pro 100 ml).

Beispiele geeigneter Diphenole sind Hydrochinon, Resorcin, 4,4'-Dihydroxydiphenyl, Bis(Hydroxyphenyl)-alkane, wie z.B. $C_1$-$C_8$-Alkylen- und $C_2$-$C_8$-Alkyliden-bisphenole, Bis(hydroxyphenyl)-cycloalkane wie z.B. $C_5$-$C_6$-Cycloalkylen- und $C_5$-$C_6$-Cycloalkyliden-bisphenole, und Bis(hydroxyphenyl)-sulfide, -ether, -ketone, -sulfoxide oder -sulfone, weiterhin α, α'-Bis(hydroxyphenyl)-diisopropylbenzol und die entsprechenden kernalkylierten und kernhalogenierten Verbindungen.

Weitere zur Herstellung von Polycarbonaten geeignete Diphenole sind beschrieben in den US-Patenten 3 028 365, 3 148 172, 2 991 273, 3 271 367 und 2 999 846 und in den deutschen Offenlegeschriften DE-OS 2 063 050, 2 063 052, 2 211 957 und 2 211 956.

Bevorzugte Diphenole sind z.B. 2,2-Bis(4-hydroxyphenyl)-propan, 2,2-Bis(4-hydroxy-3,5-dimethylphenyl)-propan, Bis(4-hydroxyphenyl)-methan, Bis(4-hydroxy-3,5-dimethylphenyl)-methan, Bis(4-hydroxyphenyl)sulfid und Bis(4-hydroxyphenyl)-sulfon.

Für die erfindungsgemäße Polycarbonatherstellung ebenfalls geeignete halogenierte Diphenole sind beispielsweise

2,2-Bis-(3,5-dichlor-4-hydroxyphenyl)-propan,
2,2-Bis-(3,5-dibrom-4-hydroxyphenyl)-propan,
2,2-Bis-(3-chlor-4-hydroxyphenyl)-propan,
2-(3,5-dichlor-4-hydroxyphenyl)-2-(4-hydroxyphenyl)-propan,
2,2-Bis-(3-chlor-5-methyl-4-hydroxyphenyl)-propan,
2,2-Bis-(3-brom-4-hydroxy-phenyl)-propan und ähnliche Diphenole, wie sie durch folgende Strukturformel beschrieben sind;

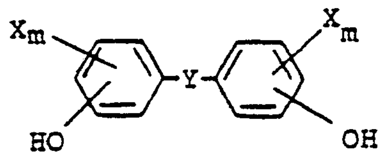

worin

Y - $CH_2$- oder -$C(CH_3)_2$- ist, X Halogen, vorzugsweise Chlor oder Brom und m = 1,2,3 oder 4 sind. Diese halogenierten Diphenole werden als Comonomere vorzugsweise in Mengen bis zu 10 Mol-%, bezogen auf Mole Diphenole, zur Herstellung der erfindungsgemäßen Polycarbonate mitverwendet.

Die erfindungsgemäßen Polycarbonate zeigen eine Kombination guter Eigenschaften wie leichte Verarbeitung dank der reduzierten Schmelzviskosität und ausgezeichnete physikalische Eigenschaften.

Wegen der hohen Schmelzviskosität handelsüblicher Polycarbonate, die mit Monophenolen abgebrochen worden sind, wird ihre Verarbeitung, d.h. der Spritzguß, bei Temperaturen über 315°C ausgeführt. Formen mit kompliziertem Aufbau oder solche mit feinen Bohrungen führen zu besonderen Schwierigkeiten, da die Schmelze oft erstarrt, bevor die Form vollständig gefüllt ist. Bei gesteigerter Verarbeitungstemperatur besteht indes die Gefahr eines thermischen Abbaus des Polycarbonats.

Die vorliegende Erfindung bietet eine vorteilhafte Lösung an, indem die erwünschten Eigenschaften hochmolekularer linearer Polycarbonate bei reduzierter Schmelzviskosität erhalten bleiben und somit die Verarbeitung komplizierter Teile bei relativ niedrigen Temperaturen ermöglicht.

Die Produkte der vorliegenden Erfindung können zu Formkörpern, Prüfkörpern, Filmen usw. verarbeitet werden. Stabilisatoren und Füllstoffe können in üblicher Weise eingearbeitet werden. Diese Additive können beispielsweise Glasfasern oder mineralische Füllstoffe wie Talkum sein. Die erfindungsgemäßen Polycarbonate können für den Spritzguß dünner Teile wie Telefon-F-10-Verbinder und für Videodiscs verwendet werden.

**Beispiele**

Die folgenden Beispiele sollen die Erfindung näher veranschaulichen:

**I. Vergleichsbeispiele**

Polycarbonate mit Phenol als Kettenabbrecher

A. 456 Gew.-Teile 2,2-(4,4'-Dihydroxydiphenyl)-propan und 6,2 Gew.-Teile Phenol (3,2 Mol-% bezogen auf Mole Bisphenol) werden in 1,5 Wasser suspendiert. Der Sauerstoff wird aus der Reaktionsmischung, die sich in einem 3-Halskolben mit Rührer und Gaseinleitungsrohr befindet, entfernt indem man 15 min lang Stickstoff durch die Reaktionsmischung leitet. Unter Rühren werden 355 Gew.-Teile einer 45 %igen Natriumhydroxydlösung (wäßrig) und 1000 Gew.-Teile Dichlormethan zugefügt. Die Mischung wird auf 25°C gekühlt. Während die Mischung weiter durch Kühlen auf 25°C gehalten wird, werden 237 Gew.-Teile Phosgen innerhalb von 120 min zugefügt. Eine zusätzliche Menge von 75 Gew.-Teile einer 45 %igen wäßrigen Natriumhydroxidlösung werden nach 15 - 30 min zugefügt, oder nachdem die Adsorption von Phosgen begonnen hat. 1,6 Gew.-Teile Triethylamin werden zu der Lösung gegeben und diese Mischung wird weitere 15 min gerührt. Eine hochviskose Lösung wird erhalten, deren Viskosität durch Zugabe von Dichlormethan reguliert wird. Die wäßrige Phase wird abgetrennt. Die organische Phase wird mit Wasser gewaschen bis sie frei von Alkalien und Salzen ist. Das Polycarbonat wird aus der gereinigten organischen Lösung isoliert und getrocknet. Das Polycarbonat hat eine relative Lösungsviskosität von 1,300 gemessen an einer Lösung von 0,5 g in 100 ml Dichlormethan bei 25°C. Dieser Wert entspricht einem Gewichtsmittelmolekulargewicht von ungefähr 31 000. Das so erhaltene Polycarbonat wird extrudiert und granuliert.

B. Aus 433 Gew.-Teilen Bisphenol-A (95 Mol %) und 54 Gew.-Teilen Tetrabrombisphenol-A (5 Mol %) und 6,2 Gew.-Teilen Phenol (3,2 Mol % bezogen auf Mole Bisphenole) wird analog Beispiel A ein aromatisches Polycarbonat mit einer relativen Lösungsviskosität $\eta_{rel}$ 1,270 hergestellt ($\eta_{rel}$ gemessen wie in Beispiel A).

C. Aus 453 Gew.-Tailen Bisphenol-A (99,3 Mol %), 2,4 Gew.-Teilen Isotinbiskresol (3,3-Bis-(4-hydroxy-3-methyl-phenyl)-2-oxo-2,3-dihydroindol) (0,7 Mol %) und 6,2 Gew.-Teilen Phenol (3,2 Mol % bezogen auf Mole Bisphenol) wird analog Beispiel A ein verzweigtes, aromatisches Polycarbonat mit einer relativen Lösungsviskosität $\eta_{rel}$ 1,320 hergestellt ($\eta_{rel}$ gemessen wie in Beispiel A).

D. Aus 453 Gew.-Teilen Bisphenol-A (99,3 Mol %), 2,4 Gew.-Teilen Isotinbiskresol (0,7 Mol %) und 20 Gew.-Teilen N-Methylperfluorbutylsulfonamid (3,2 Mol %, bezogen auf Mole Bisphenol) wird analog Beispiel A ein verzweigtes aromatisches Polycarbonat mit einer relativen Lösungsviskosität $\eta_{rel}$ 1,275 hergestellt ($\eta_{rel}$ gemessen wie in Beispiel A).

**II Die erfindungsgemäßen Polycarbonate**

E. Eine Lösung wird hergestellt aus 3,192 kg 2,2-Bis-(4-hydroxyphenyl)-propan (Bisphenol A) (14 Mol), 2,53 kg einer 45 %igen wäßrigen Natriumhydroxidlösung und 15 Litern destillierten Wassers. Nach Zugabe von 34 kg Dichlormethan und 140 g N-Methylperfluorbutylsulfonamid (3,3 Mol %, bezogen auf Mole Bisphenol) gelöst in 1 kg Dichlormethan bei Raumtemperatur werden unter Rühren 2,8 kg Phosgen bei 20-25 Min eingeleitet. Der pHwert wird während der Phosgenierung bei 13 - 14 gehalten, indem weitere 26,3 kg einer 6,5 %igen wäßrigen Natriumhydroxidlösung zugefügt werden. 15 ml Triethylamin werden zugefügt und anschließend wird die Lösung für weitere 30 min gerührt. Die obere wäßrige Phase wird abgetrennt, die organische Phase angesäuert und dann gewaschen bis sie frei von Elektrolyten ist. Die Dichlormethan-Lösung wird eingeengt und das so erhaltene Polycarbonat wird 8 h bei 110°C getrocknet. Die relative Lösungsviskosität beträgt $\eta_{rel}$ 1,288 (gemessen wie in Beispiel A).

F. Aus 433 Gew.-Teilen Bisphenol-A (95 Mol %) und 54 Gew.-Teilen Tetrabrombisphenol-A (2,2-Bis-(4-hydroxy-3,5-dibromphenyl)-propan) (5 Mol %) und 20 Gew.-Teilen N-Methyl-perfluorbutylsulfonamid (3,2 Mol %, bezogen auf Mole Bisphenole) als Kettenabbrecher wird analog Beispiel E ein aromatisches Polycarbonat mit einer relativen Lösungsviskosität $\eta_{rel}$ 1,260 (gemessen wie in Beispiel A) hergestellt.

G. Aus 3192 Gew.-Teilen Bisphenol-A und 230 Gew.-Teilen N-Methyl-perfluoroctylsulfonamid (3,3 Mol %, bezogen auf Mole Bisphenol) als Kettenabbrecher wird analog Beispiel E ein aromatisches Polycarbonat mit einer relativen Lösungsviskosität $\eta_{rel}$ 1,277 (gemessen wie in Beispiel A) hergestellt.

**Tabelle 1**

| Beisp. | Kettenregler | BPA Mol % | TBrBPA Mol % | Verzweiger/Kettenabbrecher Mol % | η rel | Vicat B Temperatur °C | Schmelzviskosität bei 300°C/Pa.s. Schergeschwindigkeit($sec^{-1}$) $10^1$ | $10^3$ |
|---|---|---|---|---|---|---|---|---|
| A | Phenol | 100 | — | —/3,2 | 1,300 | 148 | 550 | 390 |
| B | Phenol | 95 | 5 | —/3,2 | 1,270 | 153 | 620 | 350 |
| C | Phenol | 99,3 | — | 0,7/3,2 | 1,320 | 150 | 2000 | 400 |
| D | Verbindung 1 | 99,3 | — | 0,7/3,2 | 1,275 | 153 | 360 | 145 |
| E | Verbindung 1 | 100 | — | —/3,3 | 1,288 | 151 | 260 | 90 |
| F | Verbindung 1 | 95 | 5 | —/3,2 | 1,260 | 153 | 370 | 180 |
| G | Verbindung 2 | 100 | — | —/3,3 | 1,277 | — | 170 | 85 |

Verbindung 1 = N-Methyl-perfluorbutylsulfonamid
Verbindung 2 = N-Methyl-perfluoroctylsulfonamid

**Patentansprüche**

1. Verfahren zur Herstellung von linearen aromatischen Polycarbonaten mit $\bar{M}_w$ (Gewichtsmittelmolekulargewicht) von 10 000 bis 100 000 nach dem bekannten Zweiphasengrenzflächenverfahren aus Diphenolen, Kettenabbrechern und Phosgen unter Anwendung bekannter Katalysatoren, Lösungsmittel, Alkalikonzentrationen und Reaktionstemperaturen, dadurch gekennzeichnet, daß N-Alkyl-perfluoralkylsulfonamide und/oder N-Cycloalkyl-perfluoralkylsulfonamide als Kettenabbrecher in Mengen von 1 Mol-% bis 10 Mol-%, bezogen auf die Mole an jeweils eingesetzten Diphenolen, eingesetzt werden.

2. Verfahren gemäß Anspruch 1, dadurch gekennzeichnet, daß man die N-Alkyl-perfluoralkylsulfonamide und/oder N-Cycloalkyl-perfluorsulfonamide in Mengen von 2 Mol-% bis 5 Mol-%, bezogen auf die Mole an jeweils eingesetzten Diphenolen, einsetzt.

3. Polycarbonate erhältlich nach dem Verfahren der Ansprüche 1 und 2.

4. Polycarbonate gemäß Anspruch 3, die der allgemeinen Formel (III)

$$E-(O-Z-O-\underset{\underset{O}{\|}}{C}-)_n-O-Z-O-E' \quad (III),$$

entsprechen,
worin
E und E' gleiche oder verschiedene Reste der Formel (IV) sind,

$$R_f'-SO_2-\dot{N}-R$$

in der
$R_f'$ ein lineares oder verzweigtes Perfluoriertes Alkyl, R ein lineares oder verzweigtes, gesättigtes oder ungesättigtes Alkyl oder Cycloalkyl, Z ein zweiwertiger aromatischer Rest und "n" der Polymerisationsgrad ist, der einem Gewichtsmittel-Molekulargewicht des aromatischen Polycarbonats von etwa 10 000 bis etwa 100 000 entspricht.

**Claims**

1. Process for the preparation of linear aromatic polycarbonates with $\bar{M}_w$ (weight average molecular weight) of 10,000 to 100,000 by the known two phase interfacial process from diphenols, chain stoppers and phosgene using known catalysts, solvents, alkali concentrations and reaction temperatures, characterised in that N-alkylperfluoroalkyl sulphonamides and/or N-cycloalkyl-perfluoroalkyl sulphonamides are used as chain stoppers in quantities of 1 mol % to 10 mol %, relative to the moles of the diphenols used in each case.

2. Process according to Claim 1, characterised in that the N-alkylperfluoroalkyl sulphonamides and/or N-cycloalkyl-perfluorosulphonamides are used in quantities of 2 mol % to 5 mol %, relative to the moles of the diphenols used in each case.

3. Polycarbonates obtainable by the process of Claims 1 and 2.

4. Polycarbonates according to Claim 3 which correspond to the general formula (III)

$$E-(O-Z-O-\underset{\underset{O}{\|}}{C}-)_n-O-Z-O-E' \quad (III),$$

wherein
E and E' are identical or different radicals of the formula (IV)

$$R_f'-SO_2-\dot{N}-R$$

in which
$R_f'$ is a linear or branched perfluorinated alkyl radical,
R is a linear or branched, saturated or unsaturated alkyl or cycloalkyl radical,
Z is a divalent aromatic radical and
"n" is the degree of polymerisation which corresponds with a weight average molecular weight of the aromatic polycarbonate of about 10,000 to about 100,000.

## Revendications

1. Procédé de production de polycarbonates aromatiques linéaires de valeur $\bar{M}_p$ (moyenne en poids du poids moléculaire) de 10 000 à 100 000 par le procédé connu à l'interface entre deux phases à partir de diphénols, d'agents de terminaison de chaîne et de phosgène en utilisant des catalyseurs, des solvants, des concentrations en alcali et des températures de réaction connus, caractérisé en ce qu'on utilise des N-alkylperfluoralkylsulfonamides et/ou des N-cycloalkyl-perfluoralkylsulfonamides comme agents de terminaison de chaîne en quantités de 1 à 10 moles % par rapport aux moles des diphénols utilisés dans chaque cas.

2. Procédé suivant la revendication 1, caractérisé en ce qu'on utilise des N-alkylperfluoralkylsulfonamides et/ou des N-cycloalkylperfluorosulfonamides en quantités de 2 à 5 moles % par rapport aux moles de diphénols utilisés dans chaque cas.

3. Polycarbonates pouvant être obtenus par le procédé suivant les revendications 1 et 2.

4. Polycarbonates suivant la revendication 3, qui répondent à la formule generale (III)

$$E - (O - Z - O - \underset{\overset{\parallel}{O}}{C} -)_n - O - Z - O - E' \qquad (III)$$

dans laquelle
E et E' sont des restes egaux ou différents de formule (IV)

$$R_{f'} - SO_2 - \overset{|}{N} - R$$

dans laquelle
$R_{f'}$ est un groupe alkyle perfluore lineaire ou ramifié, R est un groupe alkyle linéaire ou ramifié saturé ou insaturé ou cycloalkyle, Z est un reste aromatique divalent et "n" désigne le degré de polymérisation qui correspond à une moyenne en poids du poids moléculaire du polycarbonate aromatique d'environ 10 000 à environ 100 000.